# EUROPEAN PATENT SPECIFICATION

(11) **EP 2 695 905 B1**
(45) Date of publication and mention of the grant of the patent: **27.01.2021**
(21) Application number: 12768632.7
(22) Date of filing: 28.03.2012
(51) Int. Cl.: C08G 63/60, C08J 5/00, C08K 3/34, C08K 7/14, C08L 67/00, D01F 6/62, D01F 6/84

(54) **FULLY AROMATIC POLYESTER AND POLYESTER RESIN COMPOSITION**
VOLLAROMATISCHES POLYESTER UND POLYESTERHARZZUSAMMENSETZUNG
POLYESTER ENTIÈREMENT AROMATIQUE ET COMPOSITION DE RÉSINE POLYESTER

(30) Priority: 01.04.2011 JP 2011081762
(43) Date of publication of application: 12.02.2014
(73) Proprietor: Polyplastics Co., Ltd., Tokyo 108-8280 (JP)
(72) Inventor: YOKOTA, Toshiaki, Fuji-shi Shizuoka 416-8533 (JP); OHTAKE, Mineo, Fuji-shi Shizuoka 416-8533 (JP)
(74) Representative: Barker Brettell LLP
(86) International application number: PCT/JP2012/058050
(87) International publication number: WO 2012/137636

(56) References cited:
- JP-A- 1 152 123
- JP-A- 2 016 120
- JP-A- 2 265 919
- JP-A- 59 043 021
- JP-A- 59 062 630
- JP-A- 2001 200 034
- US-A- 5 227 456
- US-B1- 6 268 419

## Description

### Technical Field

The present invention relates to a wholly aromatic polyester being excellent both in heat resistance and toughness, as well as capable of being produced in a conventional polymerization device, and a polyester resin composition thereof.

### Background Art

Wholly aromatic polyesters commercially available at present contain 4-hydroxybenzoic acid as a main component. However, the homopolymer of 4-hydroxybenzoic acid has a melting point higher than its decomposition point, it is necessary to lower the melting point by copolymerizing various components.

A wholly aromatic polyester obtained by using 1,4-phenylenedicarboxylic acid, 1,4-dihydroxybenzene, 4, 4' -dihydroxybiphenyl or the like as a copolymer component has a high melting point of 350°C or more, which is too high to carry out melt-processing with a general-purpose device. In addition, various methods have been attempted in order to lower such a high melting point up to a temperature at which the processing can be performed with a general-purpose melt-processing device, and the lowering of melting point has been realized to some extent, but there arises a problem in which heat resistance represented by mechanical property cannot be maintained at a high temperature (around below the melting point).

In order to solve those problems, there has been proposed a copolymer polyester obtained by combining 6-hydroxy-2-naphthoic acid, a diol component, dicarboxylic acid component in JP-A 59-43021, JP-A 59-62630 and JP-A 02-16120.

### Disclosure of the Invention

Since the copolymer polyester proposed in JP-A 59-43021, JP-A 59-62630 and JP-A 02-16120 has a low toughness, there is a problem in which cracks are generated in a molded article at the time of molding.

An object of the present invention is to solve the above-mentioned problems and to provide a wholly aromatic polyester excellent both in heat resistance and toughness.

As a result of the present inventors' intensive study in order to achieve the above-mentioned object, it has been found that, in a polymer composed of 4-hydroxybenzoic acid, 6-hydroxy-2-naphthoic acid, 1,4-phenylenedicarboxylic acid, 1,3-phenylenedicarboxylic acid, and 4,4'-dihydroxybiphenyl, the combination of 6-hydroxy-2-naphthoic acid and 1,3-phenylenedicarboxylic acid in the specific amounts is effective for achieving the above-mentioned object, and the present invention has been completed.

Namely, the present invention relates to a wholly aromatic polyester, which exhibits optical anisotropy at the time of molding, the polyester containing, as essential constituents, the constitutional units represented by the general formulae (I), (II), (III), (IV) and (V), respectively, and containing, relative to a total of all constitutional units, the constitutional unit (I) in an amount of 35 to 75 mol%, the constitutional unit (II) in an amount of 2 to 8 mol%, the constitutional unit (III) in an amount of 4.5 to 30.5 mol%, the constitutional unit (IV) in an amount of 3 to 7 mol%, the constitutional unit (V) in an amount of 12.5 to 32.5 mol%, the total of constitutional units (II) and (IV) being in an amount of 4 to 10 mol%;

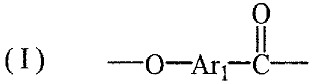

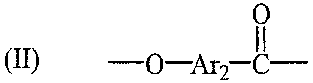

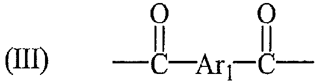

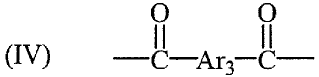

(V) -O-Ar₄-O-

wherein Ar₁ is 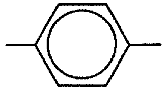 Ar₂ is 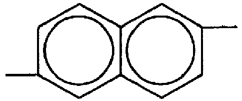 Ar₃ is 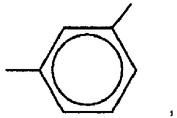 and Ar₄ is

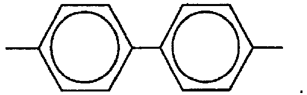

Since the wholly aromatic polyester which exhibits optical anisotropy when it is molten and includes the particular constitutional units and a composition containing it, obtained by the present invention, have a good fluidity when it is molten and a good heat resistance of molded articles, and are excellent in toughness, and the molding processing temperature is not so high. Therefore, an injection molding, extrusion molding and compression molding are possible without using a molding device having specific structure, and the polyester and the composition can be processed to various three-dimensional molded articles, fibers, films, and the like. Particularly, the polyester and the composition are suitable for a connector, a CPU socket, a relay switch part, a bobbin, an actuator, a noise-reduction filter case, or a molded article such as a thermal fixing roll of OA equipment.

### Brief Description of the Drawings

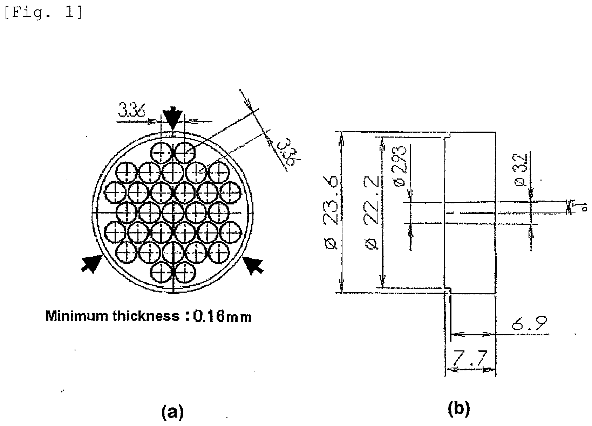

[Fig. 1] Fig. 1 shows a molded article which was used for crack evaluation of the molded articles in Example, and (a) shows a plan view, (b) illustrates dimensions thereof. In the drawings, unit of the values are mm.

### Detailed Description of the Invention

In order to put the above-mentioned constitutional units (I) to (V) into practice, various compounds having ordinary ester-forming ability are used. Hereinafter, starting compounds which are required to form the wholly aromatic polyester constituting the present invention will be specifically explained in order.

The constitutional unit (I) is derived from 4-hydroxybenzoic acid.

The constitutional unit (II) is derived from 6-hydroxy-2-naphthoic acid.

The constitutional unit (III) is derived from 1,4-phenylenedicarboxylic acid.

The constitutional unit (IV) is derived from 1,3-phenylenedicarboxylic acid.

In addition, the constitutional unit (V) is derived from 4,4'-dihydroxybiphenyl.

According to the present invention, it is necessary that the above-mentioned constitutional units (I) to (V) are contained, and that the constitutional unit (I) is within an amount of 35 to 75 mol% (preferably 40 to 65 mol%), the constitutional unit (II) is within an amount of 2 to 8 mol% (preferably 3 to 7 mol%), the constitutional unit (III) is within an amount of 4.5 to 30.5 mol% (preferably 13 to 26 mol%), the constitutional unit (IV) is within an amount of 3 to 7 mol%, and the constitutional unit (V) is within an amount of 12.5 to 32.5 mol% (preferably 15.5 to 29 mol%), based on total of all constitutional units and the total of constitutional units (II) and (IV) is within an amount of 4 to 10 mol% (preferably 5 to 10 mol%).

When the constitutional unit (I) is less than 35 mol% and more than 75 mol%, the melting point is significantly increased, and in some cases, the polymer is solidified within a reactor at the time of manufacturing, with the result that it becomes unable to manufacture a polymer having a desired molecular weight. Hence, this is not preferable.

When the constitutional unit (II) is less than 2 mol%, toughness is low, which is not preferable. When the constitutional unit (II) is more than 8 mol%, the heat resistance of the polymer is reduced. Hence, this is not preferable.

When the constitutional unit (III) is less than 4.5 mol% and more than 30.5 mol%, the melting point is significantly increased, and in some cases, the polymer is solidified within the reactor at the time of manufacturing, with the result that it becomes unable to manufacture the polymer having the desired molecular weight. Hence, this is not preferable.

When the constitutional unit (IV) is less than 2 mol%, toughness is low, which is not preferable. In addition, when the constitutional unit (IV) is more than 8 mol%, the heat resistance of the polymer is reduced. Hence, this is not preferable.

Furthermore, when the constitutional unit (V) is less than 12.5 mol% and more than 32.5 mol%, the melting point is significantly increased, and in some cases, the polymer is solidified within the reactor at the time of manufacturing, with the result that it becomes unable to manufacture the polymer having the desired molecular weight. Hence, this is not preferable.

Moreover, when the constitutional units (II) + (IV) are less than 4 mol%, the crystallization heat quantity of the polymer determined by differential calorimetry indicating a crystallized state of the polymer is 2.5 J/g or more, and toughness becomes low, which is not preferable. In the present invention, the value of the crystallization heat quantity is 2.3 J/g or less, and is more preferably 2.0 J/g or less. In addition, when the constitutional units (II) + (IV) are more than 10 mol%, the heat resistance of the polymer is reduced. Hence, this is not preferable.

Meanwhile, the crystallization heat quantity refers to a heat quantity determined as follows: in differential calorimetry, after the observation of an endothermic peak temperature (Tm1) which is observed when the polymer is measured under a condition in which the temperature of the polymer is increased from the room temperature at 20°C/minute, the polymer is held for 2 minutes at a temperature of Tm1 + 40°C, and thereafter the heat quantity of an exothermic peak is determined from the peak of the exothermic peak temperature observed when the polymer is measured under a temperature drop condition of 20°C/minute.

Meanwhile, as long as the object of the present invention is not disturbed, a small amount of known constitutional unit other than the constitutional units (I) to (V) described above can also be introduced into the wholly aromatic liquid crystalline polymer.

As mentioned above, JP-A 59-43021 (Patent Document 1) and JP-A 02-16120 (Patent Document 3) have proposed a liquid crystalline polymer having both heat resistance and easy processing, and for example, Example of JP-A 02-16120 (Patent Document 3) has proposed a liquid crystalline polymer including the constitutional unit (I) in an amount of 64 mol%, the constitutional unit (II) in an amount of 1 mol%, the constitutional unit (III) in an amount of 15.5 mol%, the constitutional unit (IV) in an amount of 2 mol%, and the constitutional unit (V) in an amount of 17.5 mol%. However, there exists a problem in which this liquid crystalline polymer has a low toughness.

In contrast to this, in the present invention, it is possible to obtain the wholly aromatic polyester being excellent in any of heat resistance, easy processability, productivity and toughness by limiting the amounts of constitutional units (I) to (V) and the amounts of constitutional units (II) + (IV), to the range described above.

The wholly aromatic polyester of the present invention is polymerized through the use of a direct polymerization method or an interesterification method, and in the polymerization, there are used a melt polymerization method, a solution polymerization method, a slurry polymerization method, a solid polymerization method and the like.

In the present invention, in the polymerization, there can be used an acylating agent to a polymerization monomer, and as an acid chloride derivative, a monomer which is activated at its end. Examples of the acylating agents include acid anhydride such as acetic acid anhydride, and the like.

In these polymerization, various catalysts can be used, and typical examples include dialkyltin oxides, diaryltin oxides, titanium dioxide, alkoxytitanium silicates, titanium alcoholates, alkali metal salts or alkali earth metal salts of carboxylic acids, Lewis acids such as BF₃, and the like. Generally, an amount of the catalyst is preferably about 0.001 to 1 weight%, particularly about 0.003 to 0.2 weight% relative to the total weight of monomers.

In addition, when carrying out the solution polymerization or slurry polymerization, there are used liquid paraffin, high heat resistive synthetic oil, inert mineral oil and the like as a solvent.

The reaction conditions include a reaction temperature of 200 to 380°C, an ultimate pressure of 0.1 to 760 Torr (namely, 13 to 101,080 Pa). Particularly in melt reaction, a reaction temperature is 260 to 380°C, preferably 300 to 360°C, and an ultimate pressure is 1 to 100 Torr (namely, 133 to 13, 300 Pa), preferably 1 to 50 Torr (namely, 133 to 6,670 Pa).

The reaction can be initiated by charging the whole starting monomers, the acylating agent and the catalyst into one reactor (one-stage method), or causing the resultant substance to react with the monomers (III) and (IV) (two-stage method) after acylating the hydroxyl groups of the starting monomers (I), (II) and (V) with the acylating agent.

The melt polymerization is carried out by, after the inside of a reaction system reaches a predetermined temperature, starting pressure reduction up to a predetermined degree of pressure reduction. After a torque of a stirrer reaches a predetermined value, an inert gas is introduced, and the pressure is changed from the pressure-reduced state through a normal pressure to a predetermined pressurized state, and then a polymer is discharged from the reaction system.

The polymer manufactured by the above-mentioned polymerization method can increase its molecular weight by the solid polymerization in which heating is performed in an inert gas, under a normal pressure or a reduced pressure. Preferred solid polymerization reaction condition is a reaction temperature of 230 to 350°C, preferably 260 to 330°C, and an ultimate pressure is 10 to 760 Torr (namely, 1,330 to 101,080 Pa) .

The fact that the polymer is a liquid crystalline polymer which exhibits optical anisotropy when it is molten is an indispensable element for having both thermal stability and easy processability in the present invention. Among the wholly aromatic polyesters including the above-mentioned constitutional units (I) to (V), although there is the wholly aromatic polyester in which an anisotropic molten phase is not formed depending on constitutional components and sequence distribution in a polymer, the polymer according to the present invention is limited to the wholly aromatic polyester which exhibits optical anisotropy when it is molten.

The properties of the molten anisotropy can be confirmed by a polarizing test method in common use, through the utilization of the orthogonal light polarizer. More specifically, the conformation of the molten anisotropy can be carried out by melting a sample placed on a hot stage manufactured by Linkam Co. Ltd. through the use of a polarizing microscope manufactured by Olympus Co., Ltd., and then by observing the molten sample under nitrogen atmosphere at a magnification of 150 times. The above-mentioned polymer is optically anisotropic, and when the polymer is inserted between orthogonal light polarizers, light can be transmitted. When a sample is optically anisotropic, a polarized light is transmitted even in a molten static liquid state.

As an index of processability of the present invention, liquid crystallinity and melting point (temperature in which crystallinity is expressed) can be considered. Whether liquid crystallinity is exhibited or not is deeply related to fluidity when it is molten, and it is essential that the polyester of the present application exhibits liquid crystallinity when it is molten.

Since a nematic liquid crystalline polymer causes significant viscosity reduction at its melting point or more, exhibiting liquid crystallinity at a temperature of the melting point or higher is an index of processability. The melting point is preferably high as much as possible from the viewpoint of heat resistance, but in consideration of thermal degradation at the time of melt processing of the polymer and the heating capacity or the like of a molding machine, the melting point (temperature in which crystallinity is expressed) is indicated as 300 to 390°C. Meanwhile, more preferable is 380°C or less.

Furthermore, it is preferable that a melt viscosity at a temperature higher than its melting point by 10 to 40 °C and at a shear rate of 1000 sec⁻¹ is 1 x 10⁵ Pa·s or less. More preferable is 5 Pa·s or more and 1 x 10² Pa·s or less. It is possible for the nematic liquid crystalline polymer to realize these melt viscosities, by including liquid crystallinity.

Next, the polyester of the present invention can be blended with various kinds of fibrous, powder and granular, or plate-like, inorganic and organic fillers, depending on the intended use.

Examples of the fibrous filler include inorganic fibrous materials such as: glass fibers; asbestos fibers; silica fibers; silica-alumina fibers; alumina fibers; zirconia fibers; boron nitride fibers; silicon nitride fibers; boron fibers; potassium titanate fibers; silicate fibers such as wollastonite; magnesium sulfate fibers; aluminum borate fibers; and further metallic fibrous materials such as stainless steel, aluminum, titanium, copper and brass, and the like. Particularly typical fibrous fillers are glass fibers. Note that there can also be used organic fibrous materials having high melting point such as polyamide, fluororesin, polyester resin, and acrylate resin.

In contrast, Examples of the powder and granular fillers include carbon black, graphite, silica, quartz powder, glass beads, milled glass fiber, glass balloons, glass powder, silicate salts such as calcium silicate, aluminum silicate, kaolin, clay, diatomaceous earth or wollastonite, metal oxides such as iron oxide, titanium oxide, zinc oxide, antimony trioxide or alumina, metal carbonates such as calcium carbonate or magnesium carbonate, metal sulfate such as calcium sulfate or barium sulfate, and others such as ferrite, silicon carbide, silicon nitride, boron nitride or various metal powder, and the like.

In addition, examples of the plate-like fillers include mica, glass flake, talc, various metal foils and the like.

Examples of the organic fillers include synthetic fibers having heat resistance and high strength, such as aromatic polyester fibers, liquid crystalline polymer fibers, aromatic polyamide or polyimide fibers, and the like.

The organic fillers and inorganic fillers can be used alone or in combination of two or more of them. Particularly, combined use of the fibrous fillers and the granular or plate-like fillers is a preferred combination in having mechanical strength, dimensional accuracy, electrical properties, and the like. A blending amount of the inorganic filler is 120 parts by weight or less relative to 100 parts by weight of the wholly aromatic polyester, preferably 20 to 80 parts by weight.

Particularly preferable is glass fiber as the fibrous filler, and is mica and talc as the plate-like filler, and the blending amount thereof is 30 to 80 parts by weight relative to 100 parts by weight of the wholly aromatic polyester. Note that a fiber length of the glass fiber is preferably 200 µm or more. In the composition containing the glass fiber in the above-mentioned blending amount, the improvements in heat distortion temperature, mechanical properties and the like are especially remarkable.

In using those fillers, it is possible to use a sizing agent or a surface treatment agent if necessary.

To the polyester of the present invention, other thermoplastic resins can be added auxiliarily within the range not impairing the intended object of the present invention.

Examples of the thermoplastic resin used in this case include polyolefins such as polyethylene or polypropylene; aromatic polyesters, composed of aromatic dicarboxylic acid and diol, such as polyethylene terephthalate or polybutylene terephthalate; polyacetal (homo- or co-polymer); polystyrene; polyvinyl chloride; polyamide; polycarbonate; ABS; polyphenylene oxide; polyphenylene sulfide; fluororesin; and the like. These thermoplastic resins may be used in combination of two or more of them.

### Examples

Hereinafter, the present invention will be more specifically explained by referring to Examples, but the present invention is not limited thereto. Meanwhile, the methods for measuring properties in Examples are as follows.

### [Melting point]

Through the use of a DSC manufactured by Perkin Elmer Inc. , after the observation of an endothermic peak temperature (Tm1) which is observed when the polymer is measured under a temperature rise condition of 20°C/min from room temperature, the polymer is held for 2 minutes at a temperature of (Tm1 + 40)°C, and then after the polymer was once cooled to room temperature under a temperature drop condition of 20°C/min, there was measured a temperature of the endothermic peak observed when the polymer is measured again at a temperature rise condition of 20°C/min.

### [Crystallization temperature]

Through the use of a DSC manufactured by Perkin Elmer Inc. , after the observation of an endothermic peak temperature (Tm1) which is observed when the polymer is measured under a temperature rise condition of 20°C/min from room temperature, the polymer is held for 2 minutes at a temperature of (Tm1 + 40)°C, and then, there was measured an exothermic peak temperature observed when the polymer is measured at a temperature drop condition of 20°C/min.

### [Crystallization heat quantity]

Through the use of a DSC manufactured by Perkin Elmer Inc. , after the observation of an endothermic peak temperature (Tm1) which is observed when the polymer is measured under a temperature rise condition of 20°C/min from room temperature, the polymer is held for 2 minutes at a temperature of (Tm1 + 40) °C, and then, there was measured a heat quantity of an exothermic peak obtained from the peak of the exothermic peak temperature observed when the polymer is measured at a temperature drop condition of 20°C/min.

### [Melt viscosity]

Amelt viscosity at a shear rate of 1000 sec⁻¹ was calculated by performing measurement through the use of Capirograph manufactured by Toyo Seiki, at a temperature higher than a melting point by 10 to 20°C, by using an orifice of 1 mm inner diameter and 20 mm length.

### [Softening temperature]

A disc having a thickness of 1 mm obtained from the prepared polyester was formed by hot-press, and the molded article was heated on a hot plate at a temperature rise rate of 20°C/min while a constant load of 12.7 MPa is applied. A temperature when a loaded needle of 1 mm diameter reached 5% of the thickness of the molded article was set to be a softening temperature.

### Example 1

A polymerization vessel provided with a stirrer, a reflux column, a monomer inlet, a nitrogen inlet, a pressure reduction / outflow line was charged with the following starting monomers, a metal catalyst, an acylating agent, and then nitrogen substitution was started.
(I) 4-Hydroxybenzoic acid: 142 g (48 mol%) (HBA)
(II) 6-Hydroxy-2-naphthoic acid: 12 g (3 mol%) (HNA)
(III) 1,4-phenylenedicarboxylic acid: 77 g (21.7 mol%) (TA)
(IV) 1,3-phenylenedicarboxylic acid: 11 g (3 mol%) (IA)
(V) 4,4'-Dihydroxybiphenyl: 97 g (24.3 mol%) (BP)
Potassium acetate catalyst: 15 mg
Acetic anhydride: 224 g

After charging of the raw materials, a temperature of the reaction system was raised to 140°C, and the reaction was carried out at 140°C for one hour. After that, the temperature was further raised to 360°C over 5.5 hours, and a pressure was reduced to 10 Torr (namely 1330 Pa) over 20 minutes therefrom, and then the melt polymerization was carried out while acetic acid, excessive acetic anhydride and other component having a low boiling point were being distilled. After the stirring torque reached a predetermined value, the pressure was changed from a reduced-pressure state to a pressurized state via a normal pressure by introducing nitrogen, and a polymer was discharged from the lower part of the polymerization vessel.

The obtained polymer had a melting point of 361°C, a crystallization temperature of 311°C, a crystallization heat quantity of 1.4 J/g, a softening temperature of 271°C, and a melt viscosity of 10 Pa·s.

### Examples 2 to 8

Polymers were obtained in the same manner as in Example 1 except that kind of the starting monomers, and charging ratio (mol%) were changed to those shown in Table 1. The results are shown in Table 1.

### Comparative Examples 1 to 12

Polymers were obtained in the same manner as in Example 1 except that kind of the starting monomers, charging ratio (mol%) were changed to those shown in Table 1. The results are shown in Table 1. With respect to Comparative Examples 8 to 9, since the polymer was solidified in the reactor at the time of production, a polymer having the desired molecular weight was not able to be produced. In the Table, APAP is 4-acetoxyaminophenol.

**[Table 1]**

| | | HBA | HNA | TA | IA | BP | APAP | Total | Melting point (°C) | Crystallization temperature (°C) | Crystallization heat quantity (J/g) | Melt viscosity (Pa·s) | Softening temperature (°C) | HNA+IA |
|---|---|---|---|---|---|---|---|---|---|---|---|---|---|---|
| Examples | 1 | 48 | 3 | 21.7 | 3 | 24.3 | | 100 | 361 | 311 | 1.4 | 10 | 271 | 6 |
| | 2 | 57 | 3 | 15 | 5 | 20 | | 100 | 322 | 276 | 1.8 | 13 | 211 | 8 |
| | 3 | 40 | 3 | 25.7 | 3 | 28.3 | | 100 | 382 | 335 | 1.6 | 6 | 282 | 6 |
| | 4 | 65 | 3 | 13.2 | 3 | 15.8 | | 100 | 327 | 280 | 1.9 | 14 | 230 | 6 |
| | 5 | 40 | 5.3 | 24.5 | 3 | 27.2 | | 100 | 358 | 308 | 1.4 | 8 | 247 | 8 |
| | 6 | 40 | 7 | 23.7 | 3 | 26.3 | | 100 | 340 | 290 | 2.1 | 11 | 232 | 10 |
| | 7 | 56.7 | 3 | 17.3 | 3 | 20 | | 100 | 336 | 288 | 1.8 | 11 | 238 | 6 |
| | 8 | 40 | 3 | 21.5 | 7 | 28.5 | | 100 | 350 | 300 | 1.9 | 9 | 231 | 10 |
| Comparative Examples | 1 | 40 | 10 | 22.2 | 3 | 24.8 | | 100 | 315 | 260 | 2.4 | 16 | 203 | 13 |
| | 2 | 65 | 10 | 9.7 | 3 | 12.3 | | 100 | 268 | 224 | 1.3 | 40 | 142 | 13 |
| | 3 | 40 | 3 | 18.7 | 10 | 28.3 | | 100 | 317 | 266 | 1.7 | 8 | 191 | 13 |
| | 4 | 65 | 3 | 6.2 | 10 | 15.8 | | 100 | 272 | 228 | 1.4 | 29 | 130 | 13 |
| | 5 | 40 | 10 | 15.2 | 10 | 24.8 | | 100 | 259 | 200 | 0.5 | 32 | 120 | 20 |
| | 6 | 65 | 10 | 2.7 | 10 | 12.3 | | 100 | 228 | 184 | 1.0 | 164 | 107 | 20 |
| | 7 | 52.5 | 6.5 | 14.2 | 6.5 | 20.3 | | 100 | 269 | 228 | 1.3 | 27 | 158 | 13 |
| | 8 | 80 | 3 | 5.5 | 3 | 8.5 | | 100 | NG | NG | - | - | - | 6 |
| | 9 | 30 | 3 | 30.5 | 3 | 33.5 | | 100 | NG | NG | - | - | - | 6 |
| | 10 | 60 | | 13.5 | 6.5 | 20 | | 100 | 344 | 287 | 3.1 | 12 | 237 | 7 |
| | 11 | 60 | 5 | 17.5 | | 12.5 | 5 | 100 | 334 | 290 | 2.7 | 18 | 230 | 5 |
| | 12 | 64 | 1 | 15.5 | 2 | 17.5 | | 100 | 358 | 308 | 2.9 | 13 | 291 | 3 |

### Example 9

A polymerization vessel provided with a stirrer, a reflux column, a monomer inlet, a nitrogen inlet, a pressure reduction / outflow line was charged with the following starting monomers, a metal catalyst, an acylating agent, and then nitrogen substitution was started.
(I) 4-Hydroxybenzoic acid: 1041 g (48 mol%) (HBA)
(II) 6-Hydroxy-2-naphthoic acid: 89 g (3 mol%) (HNA)
(III) 1,4-phenylenedicarboxylic acid: 565 g (21.7 mol%) (TA)
(IV) 1,3-phenylenedicarboxylic acid: 78 g (3 mol%) (IA)
(V) 4,4'-Dihydroxybiphenyl: 711 g (24.3 mol%) (BP) Potassium acetate catalyst: 110 mg
Acetic anhydride: 1645 g

After charging of the raw materials, a temperature of the reaction system was raised to 140°C, and the reaction was carried out at 140°C for one hour. After that, the temperature was further raised to 360°C over 5.5 hours, and a pressure was reduced to 5 Torr (namely 667 Pa) over 20 minutes, and then the melt polymerization was carried out while acetic acid, excessive acetic anhydride and other component having a low boiling point were being distilled. After the stirring torque reached a predetermined value, the pressure was changed from a reduced-pressure state to a pressurized state via a normal pressure by introducing nitrogen, and a polymer was discharged from the lower part of the polymerization vessel, and strands thereof were pelletized into pellets.

The obtained polymer had a melting point of 358°C, a crystallization temperature of 307°C, a crystallization heat quantity of 1.6 J/g, and a melt viscosity of 9 Pa·s.

33.3 parts by weight of a mica AB-25S having an average particle size of 25 µm manufactured by YAMAGUCHI MICA CO., LTD. was blended with 100 parts by weight of the pellets and kneaded by using a twin-screw extruder, and a wholly aromatic polyester composition was obtained in the form of pellet. After drying the wholly aromatic polyester composition at 140°C for 3 hours, the molded article shown in Fig. 1 was subjected to injection molding in the following molding conditions through the use of an injection molding machine, and as a result, moldability was excellent, no cracks were observed, and excellent property in toughness were observed. The results are shown in Table 2.

In the injection-molded article for evaluation shown in Fig. 1, the diameter of the circumference was 23. 6 mm, 31 pores of φ3.2 mm were formed therewithin and the minimum thickness of the pore-to-pore distance was 0.16 mm. As a gate, a three-point gate indicated by arrow part in Fig. 1 was adopted. Observation of cracks of the molded article was conducted by observing the generation of cracks around the pore through the use of a stereoscopic microscope at 5-fold magnification, and when cracks of the molded article were generated, the molded article was determined to be "× (crosses)", and where cracks were not generated, the molded article was determined to be "o (circles)".

### [Molding Conditions]

Molding machine: SE30DUZ manufactured by SUMITOMO HEAVY INDUSTRIES LTD.
Cylinder temperature:
(Nozzle)
370°C-375°C-360°C-350°C (Example 9)
340°C-340°C-330°C-320°C (Examples 10-11)
355°C-355°C-345°C-335°C (Comparative Example 13)
350°C-350°C-340°C-330°C (Comparative Example 14)
370°C-375°C-360°C-350°C (Comparative Example 15)
Mold temperature; 140°C
Injection speed; 50 mm/min
Holding pressure; 100 MPa
Pressure holding time; 2 sec
Cooling time; 10 sec
Screw rotational speed; 120 rpm
Screw back pressure; 1.2 MPa

### Example 10

A polymerization vessel provided with a stirrer, a reflux column, a monomer inlet, a nitrogen inlet, a pressure reduction/outflow line was charged with the following starting monomers, a metal catalyst, an acylating agent, and then nitrogen substitution was started.
(I) 4-Hydroxybenzoic acid: 1266 g (57 mol%) (HBA)
(II) 6-Hydroxy-2-naphthoic acid: 91 g (3 mol%) (HNA)
(III) 1,4-phenylenedicarboxylic acid: 401 g (15 mol%) (TA)
(IV) 1,3-phenylenedicarboxylic acid: 134 g (5 mol%) (IA)
(V) 4,4'-Dihydroxybiphenyl: 599 g (20 mol%) (BP)
Potassium acetate catalyst: 110 mg
Acetic anhydride: 1691 g

After charging of the raw materials, a temperature of the reaction system was raised to 140°C, and the reaction was carried out at 140°C for one hour. After that, the temperature was further raised to 360°C over 5.5 hours, and a pressure was reduced to 5 Torr (namely 667 Pa) over 20 minutes, and then the melt polymerization was carried out while acetic acid, excessive acetic anhydride and other component having a low boiling point were being distilled. After the stirring torque reached a predetermined value, the pressure was changed from a reduced-pressure state to a pressurized state via a normal pressure by introducing nitrogen, and a polymer was discharged from the lower part of the polymerization vessel, and strands thereof were pelletized into pellets.

The obtained polymer had a melting point of 323°C, a crystallization temperature of 274°C, a crystallization heat quantity of 1.8 J/g, and a melt viscosity of 10 Pa·s.

In addition, 11.1 parts by weight of the mica was blended with 100 parts by weight of the pellets and kneaded by using a twin-screw extruder, and a wholly aromatic polyester composition was obtained in the form of pellet. After drying the wholly aromatic polyester composition at 140°C for 3 hours, the molded article was subjected to injection molding in the same manner as in Example 9 through the use of an injection molding machine, and as a result, moldability was excellent, no cracks were observed, and excellent property in toughness were observed. The results are shown in Table 2.

### Example 11

A polymer was obtained in the same manner as in Example 10. The obtained polymer had a melting point of 319°C, a crystallization temperature of 273°C, a crystallization heat quantity of 1.9 J/g, and a melt viscosity of 8 Pa·s.

Furthermore, 33.3 parts by weight of the mica was blended with 100 parts by weight of the pellets and kneaded by using a twin-screw extruder, and a wholly aromatic polyester composition was obtained in the form of pellet. After drying the wholly aromatic polyester composition at 140°C for 3 hours, the molded article was subjected to injection molding in the same manner as in Example 9 through the use of an injection molding machine, and as a result, moldability was excellent, no cracks were observed, and excellent property in toughness were observed. The results are shown in Table 2.

### Example 12

A polymer was obtained in the same manner as in Example 9. The obtained polymer had a melting point of 358 °C, a crystallization temperature of 307°C, a crystallization heat quantity of 1.6 J/g, and a melt viscosity of 9 Pa·s.

Moreover, 23.1 parts by weight of the talc Crown Talc PP having an average particle size of 12.8 µm manufactured by Matsumura Industries Co., Ltd. and 30.8 parts by weight of chopped strand ECS03T-786H having a fiber diameter of 10 µm and a length of 3 mm manufactured by Nippon Electric Glass Co., Ltd. were blended with 100 parts by weight of the pellets and kneaded by using a twin-screw extruder to obtain a wholly aromatic polyester composition in the form of pellet. After drying the wholly aromatic polyester composition at 140°C for 3 hours, the molded article was subjected to injection molding in the same manner as in Example 9 through the use of an injection molding machine, and as a result, moldability was excellent, no cracks were observed, and excellent property in toughness were observed. The results are shown in Table 2.

### Example 13

A polymerization vessel provided with a stirrer, a reflux column, a monomer inlet, a nitrogen inlet, a pressure reduction / outflow line was charged with the following starting monomers, a metal catalyst, an acylating agent, and then nitrogen substitution was started.
(I) 4-Hydroxybenzoic acid: 1041 g (48 mol%) (HBA)
(II) 6-Hydroxy-2-naphthoic acid: 89 g (3 mol%) (HNA)
(III)1,4-phenylenedicarboxylic acid: 553 g (21.2 mol%) (TA)
(IV) 1,3-phenylenedicarboxylic acid: 91 g (3.5 mol%) (IA)
(V) 4,4'-Dihydroxybiphenyl: 710 g (24.3 mol%) (BP) Potassium acetate catalyst: 110 mg

### Acetic anhydride: 1644 g

After charging of the raw materials, a temperature of the reaction system was raised to 140°C, and the reaction was carried out at 140°C for one hour. After that, the temperature was further raised to 360°C over 5.5 hours, and a pressure was reduced to 5 Torr (namely 667 Pa) over 20 minutes, and then the melt polymerization was carried out while acetic acid, excessive acetic anhydride and other component having a low boiling point were being distilled. After the stirring torque reached a predetermined value, the pressure was changed from a reduced-pressure state to a pressurized state via a normal pressure by introducing nitrogen, and a polymer was discharged from the lower part of the polymerization vessel.

The obtained polymer had a melting point of 354°C, a crystallization temperature of 303°C, a crystallization heat quantity of 1.6 J/g, and a melt viscosity of 10 Pa·s.

In addition, 66.7 parts by weight of a glass fiber was blended with 100 parts by weight of the pellets and kneaded by using a twin-screw extruder, and a wholly aromatic polyester composition was obtained in the form of pellet. After drying the wholly aromatic polyester composition at 140°C for 3 hours, the molded article was subjected to injection molding in the same manner as in Example 9 through the use of an injection molding machine, and as a result, moldability was excellent, no cracks were observed, and excellent property in toughness were observed. The results are shown in Table 2.

### Comparative Examples 13 to 15

Polymerizations were conducted in the same manner as in Example 9, by setting the kind of the starting monomers and charging ratio (mol%) as those in Comparative Example 13, Comparative Example 14, and Comparative Example 15, respectively, as shown in Table 2. The obtained polymer of Comparative Example 13 had a melting point of 338°C, a crystallization temperature of 286°C, a crystallization heat quantity of 2.6 J/g, and a melt viscosity of 10 Pa·s. The obtained polymer of Comparative Example 14 had a melting point of 335°C, a crystallization temperature of 291°C, a crystallization heat quantity of 3.1 J/g, and a melt viscosity of 20 Pa·s. The obtained polymer of Comparative Example 15 had a melting point of 356°C, a crystallization temperature of 306°C, a crystallization heat quantity of 3.0 J/g, and a melt viscosity of 12 Pa·s.

Furthermore, 11.1, 25.0 and 33.3 parts by weight of mica were blended with 100 parts by weight of the pellets. Each was kneaded by using a twin-screw extruder, and wholly aromatic polyester compositions were obtained in the form of pellet, and then molded articles were subjected to injection molding in the same manner as in Example 9, and toughness (cracks of molded article) was evaluated. The results are shown in Table 2.

In each case, cracks were generated in the molded articles.

### Comparative Examples 16 to 17

A polymer was obtained in the same manner as in Comparative Example 14. The obtained polymer had a melting point of 335°C, a crystallization temperature of 291°C, a crystallization heat quantity of 3.1 J/g, and a melt viscosity of 20 Pa·s.

In addition, the blending amounts shown in Table 2 were blended with 100 parts by weight of the pellets, respectively, and kneaded by using a twin-screw extruder, and wholly aromatic polyester compositions were obtained in the form of pellet, and then, molded articles were subjected to injection molding in the same manner as in Example 9, and toughness (cracks of molded article) was evaluated. The results are shown in Table 2.

In each case, cracks were generated in the molded articles.

**[Table 2]**

| | | HBA | HNA | TA | IA | BP | APAP | Mica (Parts by weight) | Talc (Parts by weight) | Glass fiber (Parts by weight) | Melting point (°C) | Crystallization temperature (°C) | Crystallization heat quantity (J/g) | Melt viscosity (Pa•s) | Cracks of molded article | HNA+IA |
|---|---|---|---|---|---|---|---|---|---|---|---|---|---|---|---|---|
| Examples | 9 | 48 | 3 | 21.7 | 3 | 24.3 | | 33.3 | | | 359 | 326 | 1.3 | 12 | ○ | 6 |
| | 10 | 57 | 3 | 15 | 5 | 20 | | 11.1 | | | 322 | 282 | 1.0 | 16 | ○ | 8 |
| | 11 | 57 | 3 | 15 | 5 | 20 | | 33.3 | | | 319 | 286 | 1.3 | 10 | ○ | 8 |
| | 12 | 48 | 3 | 21.7 | 3 | 24.3 | | | 23.1 | 30.8 | 356 | 333 | 0.5 | 22 | ○ | 6 |
| | 13 | 48 | 3 | 21.2 | 3.5 | 24.3 | | | | 66.7 | 348 | 305 | 0.7 | 30 | ○ | 6.5 |
| Comparative Examples | 13 | 60 | | 13.5 | 6.5 | 20 | | 11.1 | | | 335 | 290 | 1.6 | 14 | × | 7 |
| | 14 | 60 | 5 | 17.5 | | 12.5 | 5 | 25 | | | 338 | 307 | 1.5 | 30 | × | 5 |
| | 15 | 64 | 1 | 15.5 | 2 | 17.5 | | 33.3 | | | 361 | 328 | 1.5 | 15 | × | 3 |
| | 16 | 60 | 5 | 17.5 | | 12.5 | 5 | | 23.1 | 30.8 | 336 | 313 | 0.9 | 45 | × | 5 |
| | 17 | 60 | 5 | 17.5 | | 12.5 | 5 | | | 66.7 | 332 | 295 | 0.9 | 45 | × | 5 |

## Claims

1. A wholly aromatic polyester, which exhibits optical anisotropy when it is molten, which has a crystallization heat quantity of 2.3 J/g or less, and which has a melting point of 300 to 390°C both parameters measured as outlined in the description,
the polymer comprising, as essential constituents, the constitutional units represented by the following formulae (I), (II), (III), (IV) and (V), containing, relative to a total of all constitutional units,
the constitutional unit (I) in an amount of 35 to 75 mol%,
the constitutional unit (II) in an amount of 2 to 8 mol%,
the constitutional unit (III) in an amount of 4.5 to 30.5 mol%,
the constitutional unit (IV) in an amount of 3 to 7 mol%,
the constitutional unit (V) in an amount of 12.5 to 32.5 mol%,
the total of constitutional units (II) and (IV) being in an amount of 4 to 10 mol%; 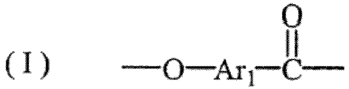 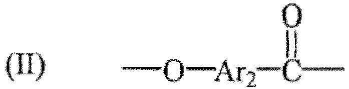 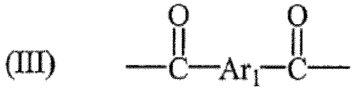 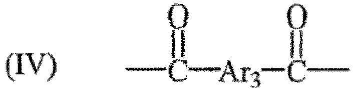
(V) -O-Ar₄-O-
wherein Ar₁ is 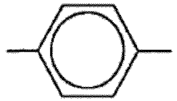 Ar₂ is 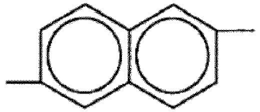 Ar₃ is 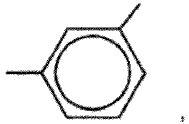 and Ar₄ is

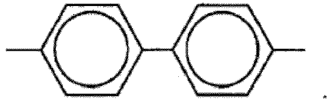

2. The wholly aromatic polyester according to claim 1, having a melt viscosity of 1 x 10⁵ Pa·s or less at a temperature higher by 10 to 40°C than a melting point of the wholly aromatic polyester and at a shear rate of 1000 sec⁻¹ both parameters measured as outlined in the experimental part of the description

3. A wholly aromatic polyester according to any one of claims 1 to 2 wherein the constitutional unit (I) is present in an amount of 40 to 65 mol%.

4. A wholly aromatic polyester according to any one of claims 1 to 3 wherein the constitutional unit (II) is present in an amount of 3 to 7 mol%.

5. A wholly aromatic polyester according to any one of claims 1 to 4 wherein the constitutional unit (III) is present in an amount of 13 to 26 mol%.

6. A wholly aromatic polyester according to any one of claims 1 to 5 wherein the constitutional unit (V) is present in an amount of 15.5 to 29 mol%.

7. A wholly aromatic polyester according to any one of claims 1 to 6 wherein the total of constitutional units (II) and (IV) is within an amount of 5 to 10 mol%.

8. A polyester resin composition comprising an inorganic or organic filler in an amount of 120 parts by weight or less relative to 100 parts by weight of the wholly aromatic polyester according to any one of claims 1 to 7.

9. The polyester resin composition according to claim 8, wherein the inorganic filler is one, two, or more types selected from a glass fiber, mica and talc, and is contained in an amount of 20 to 80 parts by weight relative to 100 parts by weight of the wholly aromatic polyester.

10. A polyester molded article obtained by molding the wholly aromatic polyester according to any one of claims 1 to 7 or the polyester resin composition according to claim 8 or 9.

11. The polyester molded article according to claim 10, being a connector, a CPU socket, a relay switch part, a bobbin, an actuator, a noise-reduction filter case or a thermal fixing roll of OA equipment.

12. The polyester molded article according to claim 10, being a polyester fiber.

13. The polyester molded article according to claim 10, being a polyester film.

## Patentansprüche

1. Vollaromatischer Polyester, der in schmelzflüssiger Form optische Anisotropie zeigt, eine Kristallisationswärmemenge von 2,3 J/g oder weniger aufweist und einen Schmelzpunkt von 300 bis 390 °C aufweist, wobei beide Parameter gemäß den Angaben in der Beschreibung gemessen werden,
wobei das Polymer als wesentliche Bestandteile die Aufbaueinheiten der folgenden Formeln (I), (II), (III), (IV) und (V) umfasst und, bezogen auf die Gesamtheit aller Aufbaueinheiten,
die Aufbaueinheit (I) in einer Menge von 35 bis 75 Mol-%,
die Aufbaueinheit (II) in einer Menge von 2 bis 8 Mol-%,
die Aufbaueinheit (III) in einer Menge von 4,5 bis 30,5 Mol-%
die Aufbaueinheit (IV) in einer Menge von 3 bis 7 Mol-% und
die Aufbaueinheit (V) in einer Menge von 12,5 bis 32,5 Mol-%
enthält, wobei die Gesamtheit der Aufbaueinheiten (II) und (IV) in einer Menge von 4 bis 10 Mol-% vorliegt; 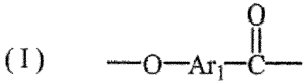 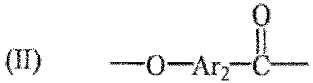 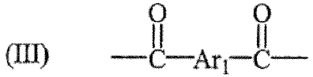 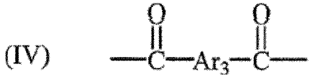
(V) -O-Ar₄-O-
wobei Ar₁ für 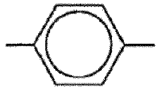 steht,
Ar₂ für 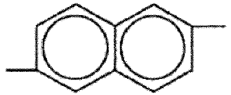 steht,
Ar₃ für 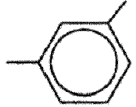 steht und
Ar₄ für 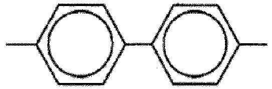 steht.

2. Vollaromatischer Polyester nach Anspruch 1 mit einer Schmelzeviskosität von 1 × 10⁵ Pa·s oder weniger bei einer Temperatur, die um 10 bis 40 °C höher ist als der Schmelzpunkt des vollaromatischen Polyesters, und bei einer Scherrate von 1000 s⁻¹, wobei beide Parameter gemäß den Angaben im experimentellen Teil der Beschreibung gemessen werden.

3. Vollaromatischer Polyester nach einem der Ansprüche 1 bis 2, wobei die Aufbaueinheit (I) in einer Menge von 40 bis 65 Mol-% vorliegt.

4. Vollaromatischer Polyester nach einem der Ansprüche 1 bis 3, wobei die Aufbaueinheit (II) in einer Menge von 3 bis 7 Mol-% vorliegt.

5. Vollaromatischer Polyester nach einem der Ansprüche 1 bis 4, wobei die Aufbaueinheit (III) in einer Menge von 13 bis 26 Mol-% vorliegt.

6. Vollaromatischer Polyester nach einem der Ansprüche 1 bis 5, wobei die Aufbaueinheit (V) in einer Menge von 15,5 bis 29 Mol-% vorliegt.

7. Vollaromatischer Polyester nach einem der Ansprüche 1 bis 6, wobei die Gesamtheit der Aufbaueinheiten (II) und (IV) innerhalb einer Menge von 5 bis 10 Mol-% liegt.

8. Polyesterharzzusammensetzung, umfassend einen anorganischen oder organischen Füllstoff in einer Menge von 120 Gewichtsteilen oder weniger, bezogen auf 100 Gewichtsteile des vollaromatischen Polyesters nach einem der Ansprüche 1 bis 7.

9. Polyesterharzzusammensetzung nach Anspruch 8, wobei es sich bei dem anorganischen Füllstoff um einen, zwei oder mehr Typen, die aus Glasfaser, Glimmer und Talk ausgewählt sind, handelt und der anorganische Füllstoff in einer Menge von 20 bis 80 Gewichtsteilen, bezogen auf 100 Gewichtsteile des vollaromatischen Polyesters, enthalten ist.

10. Polyester-Formkörper, erhalten durch Formen des vollaromatischen Polyesters nach einem der Ansprüche 1 bis 7 oder der Polyesterharzzusammensetzung nach Anspruch 8 oder 9.

11. Polyester-Formkörper nach Anspruch 10, bei dem es sich um einen Verbinder, einen CPU-Sockel, ein Relaisschalterteil, eine Spule, einen Aktuator, ein Rauschunterdrückungsfiltergehäuse oder eine Wärmefixierwalze eines OA-Geräts handelt.

12. Polyester-Formkörper nach Anspruch 10, bei dem es sich um eine Polyesterfaser handelt.

13. Polyester-Formkörper nach Anspruch 10, bei dem es sich um eine Polyesterfolie handelt.

## Revendications

1. Polyester entièrement aromatique, qui présente une anisotropie optique lorsqu'il est fondu, qui possède une quantité de chaleur de cristallisation de 2,3 J/g ou moins, et qui possède un point de fusion de 300 à 390 °C, les deux paramètres étant mesurés comme indiqué dans la description, le polymère comprenant, en tant que constituants essentiels, les motifs constitutionnels représentés par les formules suivantes (I), (II), (III), (IV) et (V), contenant, par rapport à un total de tous les motifs constitutionnels,
le motif constitutionnel (I) en une quantité de 35 à 75 % en moles,
le motif constitutionnel (II) en une quantité de 2 à 8 % en moles,
le motif constitutionnel (III) en une quantité de 4,5 à 30,5 % en moles,
le motif constitutionnel (IV) en une quantité de 3 à 7 % en moles,
le motif constitutionnel (V) en une quantité de 12,5 à 32,5 % en moles,
le total des motifs constitutionnels (II) et (IV) étant en une quantité de 4 à 10 % en moles ; 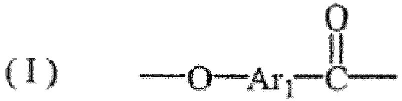 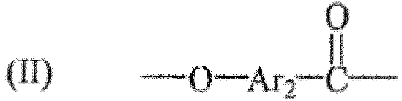 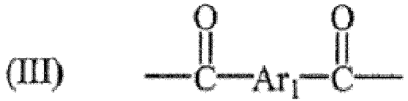 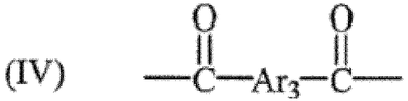
(V) -O-Ar₄-O-, Ar₁ étant 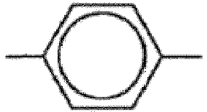
Ar₂ étant 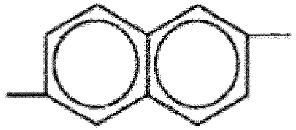 Ar₃ étant 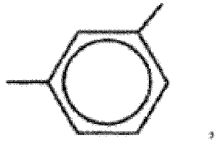 et Ar₄ étant

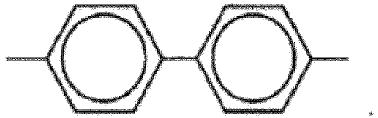

2. Polyester entièrement aromatique selon la revendication 1, possédant une viscosité à l'état fondu de 1 x 10⁵ Pa.s ou moins à une température supérieure de 10 à 40 °C qu'un point de fusion du polyester entièrement aromatique et à une vitesse de cisaillement de 1 000 s⁻¹, les deux paramètres étant mesurés comme indiqué dans la partie expérimentale de la description.

3. Polyester entièrement aromatique selon l'une quelconque des revendications 1 et 2, le motif constitutionnel (I) étant présent en une quantité de 40 à 65 % en moles.

4. Polyester entièrement aromatique selon l'une quelconque des revendications 1 à 3, le motif constitutionnel (II) étant présent en une quantité de 3 à 7 % en moles.

5. Polyester entièrement aromatique selon l'une quelconque des revendications 1 à 4, le motif constitutionnel (III) étant présent en une quantité de 13 à 26 % en moles.

6. Polyester entièrement aromatique selon l'une quelconque des revendications 1 à 5, le motif constitutionnel (V) étant présent en une quantité de 15,5 à 29 % en moles.

7. Polyester entièrement aromatique selon l'une quelconque des revendications 1 à 6, le total des motifs constitutionnels (II) et (IV) étant dans une quantité de 5 à 10 % en moles.

8. Composition de résine de polyester comprenant une charge inorganique ou organique en une quantité de 120 parties en poids ou moins par rapport à 100 parties en poids du polyester entièrement aromatique selon l'une quelconque des revendications 1 à 7.

9. Composition de résine de polyester selon la revendication 8, la charge inorganique étant d'un type, de deux types ou plus choisis parmi une fibre de verre, un mica et un talc, et étant contenue en une quantité de 20 à 80 parties en poids par rapport à 100 parties en poids du polyester entièrement aromatique.

10. Article moulé de polyester obtenu par le moulage du polyester entièrement aromatique selon l'une quelconque des revendications 1 à 7 ou de la composition de résine polyester selon la revendication 8 ou 9.

11. Article moulé de polyester selon la revendication 10, qui est un connecteur, une prise d'UC, une pièce de commutateur à relais, une bobine, un actionneur, un boîtier de filtre de réduction sonore ou un rouleau de fixation thermique d'un équipement OA.

12. Article moulé de polyester selon la revendication 10, qui est une fibre de polyester.

13. Article moulé de polyester selon la revendication 10, qui est un film de polyester.
